# EUROPEAN PATENT APPLICATION

(11) **EP 1 494 128 A1**
(43) Date of publication of application: **05.01.2005**
(21) Application number: 03014824.1
(22) Date of filing: 30.06.2003
(51) Int. Cl.: G06F 17/24, G06F 17/60

(54) **Method and system for creating a book text structure**

(71) Applicant: SAP Aktiengesellschaft, 69190 Walldorf (DE)
(72) Inventor: Wefers, Marcus, 69118 Heidelberg (DE); Fleckenstein, Thomas, 67227 Frankenthal (DE)
(74) Representative: Hössle Kudlek & Partner

(57) **Abstract**

A method and a computer system for creating a book text structure for repeated generation of updated book versions, the method comprising the steps of
A) on a client front-end computer (18), creating layout templates for various object types;
B) on a data base server unit (12) containing a collection of logical units (22), receiving a request from the client front-end computer for data to be allocated to the layout templates, interpreting the template structure data is requested for, selecting data based on the logical units and assigning layout templates to book chapters;
C) retrieving required data and inserting the retrieved data in the chapter structure created in step B, and generating a markup language file on the basis of the chapter structure containing the retrieved data;
D) on the client front-end computer, importing the markup language file generated in step C and converting the same into a print format file.

## Description

### Field of the Invention

The present invention relates to the field of automated creation of a book text structure and more particularly to the field of automated repeated generation of updated book versions of an electronic and/or hardcopy book text structure.

### Description of the Related Art

There are many cases and situations in which book text structures are used for reporting and/or instructing purposes. Such book text structures could be so-called briefing books which are used in project or development teams in order to give updated reports on project or development status to the team leader and other team members. A book text structure in the context of the present invention could also be an instruction manual for an industrial machine in a manufacturing line, a household appliance or the like. In all of these book text structures, there is a need of repeated updating when changes occur. In the context of a briefing book, there would be the necessity to generate an updated book version periodically for team meetings or report due dates, and in the context of instruction manuals every time a new version of the machine or apparatus is sold or, in a manufacturing line, when new products are manufactured with an existing machine and new settings and parameters have to be considered.

Until now, an updated book version had to be prepared manually, i.e. the changes which occurred since the last edition of the book had to be gathered "manually" in electronic files or on paper and then inserted by a responsible person in a given layout for the book text structure.

The applicant of the present invention provides a so-called balanced score card (BSC) application which is a comprehensive solution to support the strategy management process within an enterprise. The BSC-application allows the creation of so-called "score cards" which consist of "perspectives", "strategies", "objectives", "measures", "initiatives" and "risks". For each of the mentioned elements, a large number of details exist, such as definitions, owners, status indicators, time series and many others. The BSC application is an online tool which allows standard reporting and printing functionality.

### Summary of the Invention

It is therefore an object of the invention to provide a method and a computer system which allows for automated fast and reliable repeated generation of updated versions of book text structures without involvement of human operators. More particularly, it is an object of the invention to provide a system which allows to create book text structures on the basis of information available from an existing data base for further analysis based on specific information needs, taking into account the need to create a document repeatedly with the same structure but with updated information in given periods. This object is achieved by proposing a method for creating a book text structure for repeated generation of updated book versions with the features of claim 1 and a computer system for creating a book text structure for repeated generation of updated book versions with the features of claim 6.

Accordingly, a computer-implemented method for creating a book text structure for repeated generation of updated book versions comprises steps performed on a client front-end computer and steps performed on a data base server unit. First, layout templates for various object types are created on the client front-end computer. When a computer program according to the invention is run on the front-end computer, a request for data to be allocated to the layout templates is sent from the client front-end computer to the data base server unit which comprises a collection of logical units. The data base server unit receives this request and interprets the template structure data is requested for. Then, the data base server unit selects data based on the logical units and assigns layout templates to book chapters. In a further step performed on the data base server unit, the required data is retrieved and inserted in the chapter structure created before, and a markup language file is generated on the basis of the chapter structure containing the retrieved data. The markup language file is exported to the client front-end computer where it is converted into a print format file. Preferably, the markup language file might be submitted to a final editing before being converted into the print format file. Most preferably, the markup language is an extensible markup language, known as XML.

The invention thus provides a method and a system which enables a user to generate repeatedly updated versions of a predetermined book text structure by retrieving the required data from an existing collection of selectable data via so-called logical units which assign the given layout templates to book chapters and retrieve the required data.

The invention also covers a computer program with program coding means which are suitable for carrying out a process according to the invention as described above when the computer program is run on a computer. The computer program itself as well as stored on a computer-readable medium is claimed.

Further features and embodiments of the invention will become apparent from the description and the accompanying drawings.

It will be understood that the features mentioned above and those described hereinafter can be used not only in the combination specified but also in other combinations or on their own, without departing from the scope of the present invention.

The invention is schematically illustrated in the drawings by means of an embodiment by way of example and is hereinafter explained in detail with reference to the drawings. It is understood that the description is in no way limiting on the scope of the present invention and is merely an illustration of a preferred embodiment of the invention.

### Brief Description of the Drawings

In the drawings,
Figure 1 is a schematic view of a book text structure creation computer system according to the invention;
Figure 2 is a schematic block diagram visualizing the process of creating a briefing book according to the invention;
Figure 3 is a schematic block diagram visualizing in more detail how data is retrieved from a set of selectable data and an extensible markup language file is created in order to generate a briefing book according to the invention;
Figure 4 is a schematic block diagram illustrating the set-up of the CPU according to the invention;
Figure 5 is a screen shot illustrating a split screen embodiment for selection of logical units according to the invention; and
Figure 6 is an illustration of a structure behind the split screens of Figure 5.

### Detailed Description

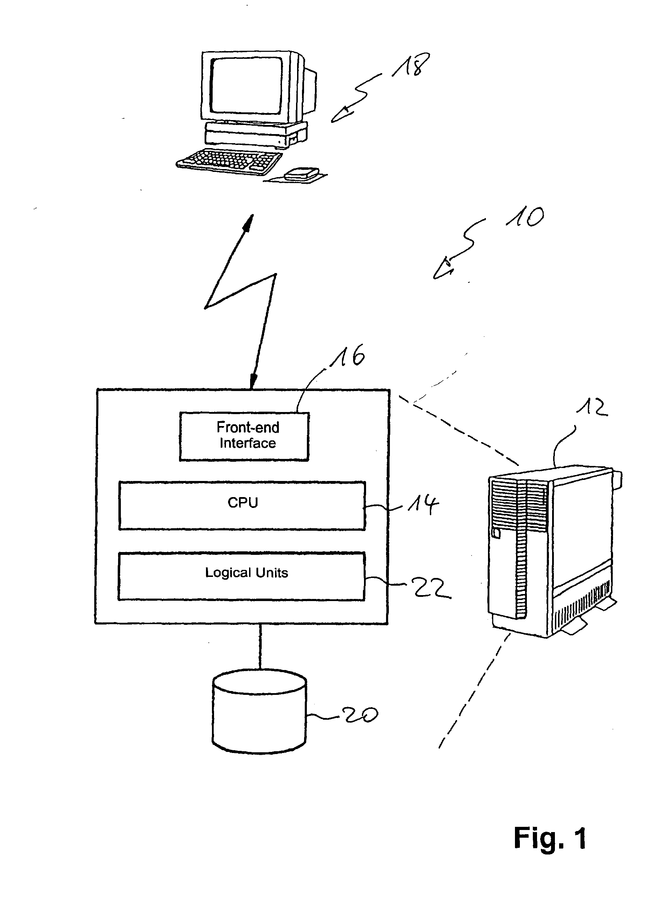

Figure 1 shows a computer system 10 for creating a book text structure for repeated generation of updated book versions comprising a client front-end computer 18 and a data base server unit 12. The data base server unit 12 further comprises a front-end interface 16 for interconnection with the client front-end computer 18, a CPU 14, a collection or repository of so-called logical units 22 as well as a data base 20 with a collection of selectable data stored thereon. CPU 14 further comprises a number of computing modules or means for performing a computer-implemented method for creating a book text structure for repeated generation of updated book versions according to the invention, said computing modules or means being described in more detail hereinafter.

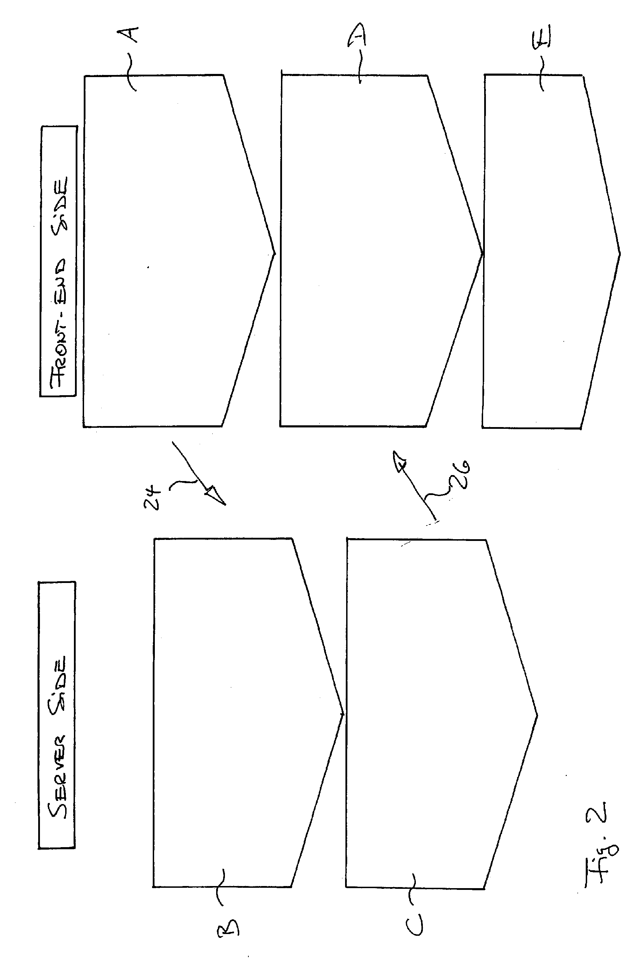

Referring now to Figure 2, a method according to the invention is described in more detail.

The method according to the invention is performed on the client front-end computer 18, designated as "front-end side" in Figure 2, on the one hand, and on the data base server unit 12, designated as "server side" in Figure 2, on the other hand. In a step A, a user creates layout templates (i.e. format definitions) for various object types on the client front-end computer 18. This can consist in taking over existing formats or changing existing formats or even create new formats. Step A is preferably performed by means of commercially available software applications such as Adobe Frame Maker or Adobe InDesign or the like. In this first step, the user creates a book text structure for the book to be generated, containing information which "chapters" the book will have, which data should be represented in it and which layout template should be used to format it. In the embodiment described hereinafter, the book to be generated is a so-called briefing book which could be described as a report book for periodically briefing a team leader and/or team members on the status of the team's project development. However, it is obvious for a person skilled in the art, that the invention can also be applied in other areas where updated versions of descriptions, reports and the like have to be generated periodically. A most preferable area of application is in manufacturing or in research.

When the user wants a briefing book to be generated, he sends a request from front-end computer 18 to the data base server unit 12 (arrow 24), on the basis of the layout templates created in step A.

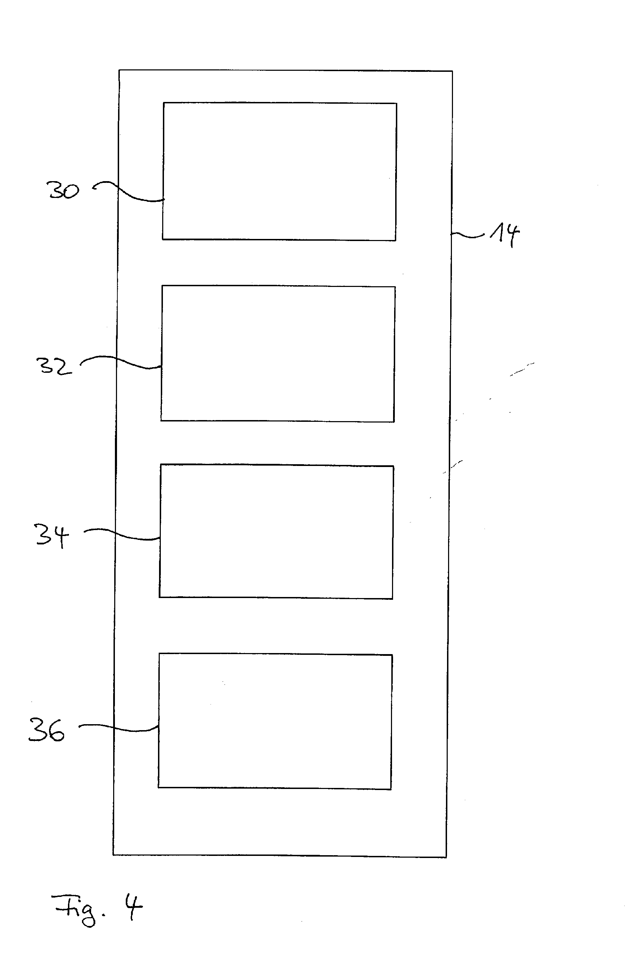

On the basis of said request received via front-end interface 16, the data base server unit 12 interprets the template structure data is to be allocated to by means of an interpretation module 30 (cf. Figure 4). This allows the computer system to recognize the structure of the layout template data is requested for. For example, the template might include styles such as Header 1 to Header 7, index style, style of body text (e.g. style "Body", font "Arial", font size "10").

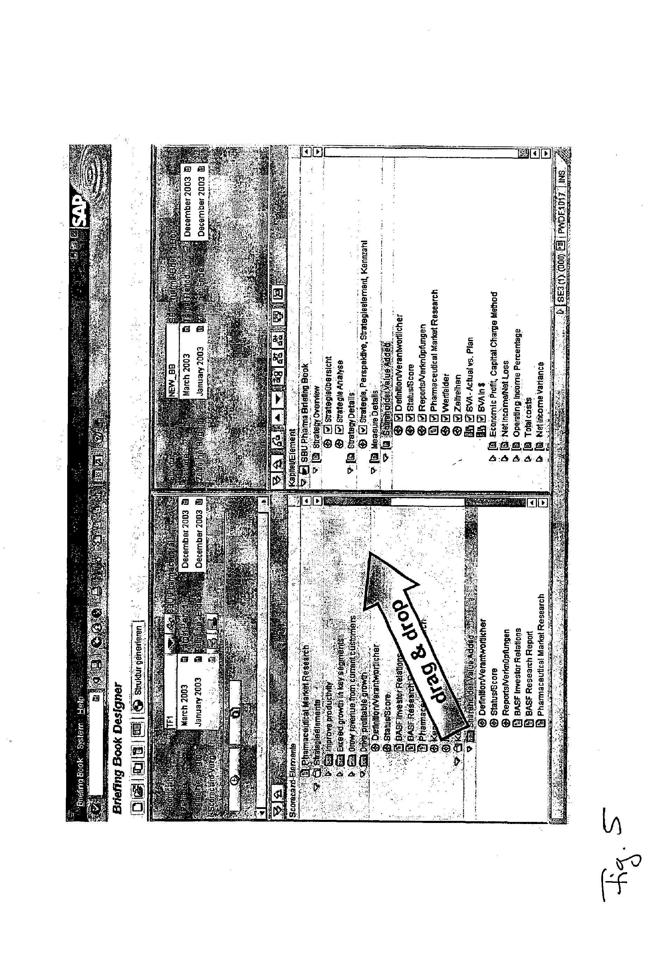

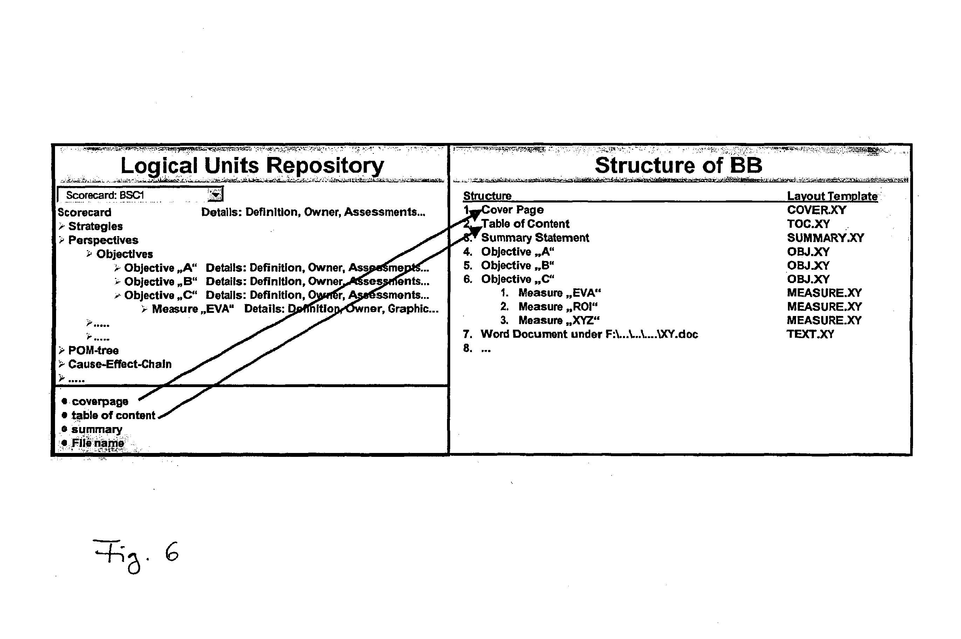

Still in step B, logical units are selected and assigned into the structure given by the layout. This could be done via comfortable drag and drop mechanisms such as shown in Figure 5 where a split screen shows a list of available logical units on the left hand side and the target structure on the right hand side, with the desired logical units being dragged,from the left split screen side to the right split screen side where they are dropped. When a logical unit is dragged to the briefing book structure, all attributes/properties of the logical unit will follow. An example of an excerpt of a structure of the logical unit repository and a briefing book structure behind the split screens of Figure 5 is shown in Figure 6. It is to be understood that the briefing book structure is the formal frame of the book to be created and does not yet contain any actual information or data from the balanced score card.

A logical unit in the context of this invention could be defined as a smallest possible data subunit of a set of data defining and describing a certain topic, a topic being a project, a machine, a manufacturing line or the like. Or, in other words, a logical unit in the context of this invention could be described as an information "atom". In the context of a briefing book structure as described with reference to the figures, a logical unit is a subunit of a balanced score card.

When selecting logical units, the user can take advantage of different possibilities, e.g. select one or several single logical units, select for example all measures of a given objective, select and/or unselect details of a selected balanced score card element, select graphical overviews like a strategy map or a prospective overview, add links to Word or Excel files etc.

In the split screen illustration of Figure 5, the split screen on the left hand side shows a list of score card elements of a given score card "TF1" for a given period. The split screen on the right hand side is the target screen identifying the structure of the briefing book to be created and showing in the lower area of the right hand split screen the list of chapters and elements selected.

According to the invention, the logical unit chosen or selected in step B does not contain all the information and data to be inserted in the briefing book, but rather contains a linking structure comprising attributes concerning the target data to be selected from the set of data stored on data base 20. Particularly, the logical unit according to the invention provides a communication link between the balanced score card (or any other similar software tool) and the data base form which data or data objects can be selected from by containing appropriate attributes or call parameters for the interface to the data base. This allows a user to create a structure first by layouting and storing templates and subsequently forwarding the templates to a server structure where logical units are assigned to the layout structure. On the basis of the briefing book structure design created that way, a flexible selection of content based on the logical units is possible. Particularly, the invention allows to retrieve data from where it is originally stored and subject to changes, amendments or updates so that no additional work is involved when creating an updated book version.

Referring back to Figure 2, in step C, data is retrieved from the data base 20 via interface 21 on the basis of the logical units and the retrieved data is filled in the briefing book structure as described above. Then, an extensible markup language file is generated on the basis of the chapter structure containing the retrieved data by means of generation module 36 (cf. Figure 4).

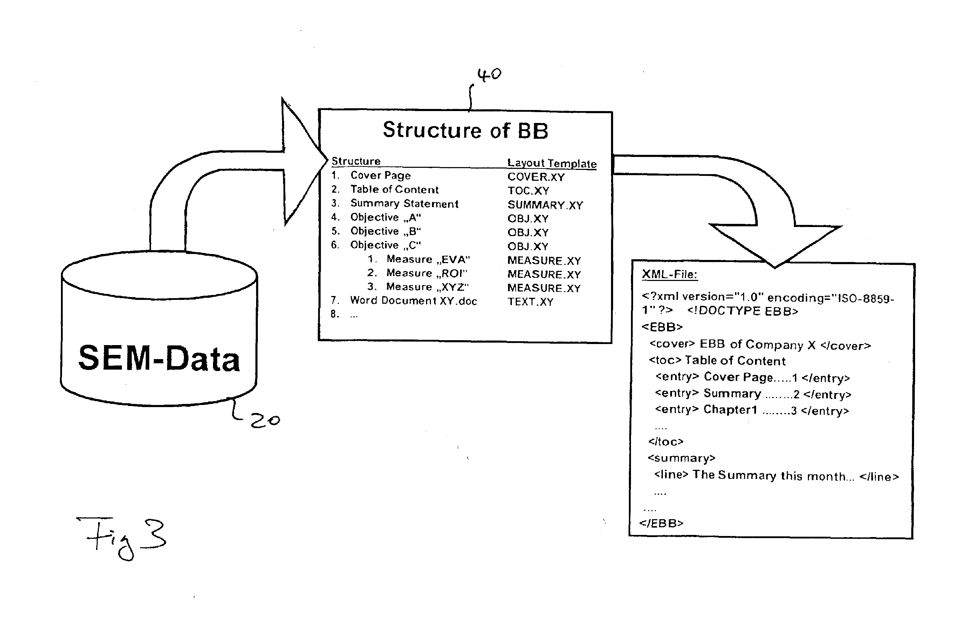

Referring to Figure 3, step C is visualized wherein case 40 shows a schematic table visualizing the briefing book structure, with the structure defined by logical units on the left hand side and the layout templates forming the basis for said structure on the right hand side. Data is then retrieved from data base 20 (which in the preferred embodiment is an SEM data base, SEM being a software solution of the applicant of the present invention containing an integral business data set for strategic enterprise management). However, any other set of data describing an updated situation of a given structure, machine, appliance, manufacturing line etc. can be used.

Once the structure in case 40 is filled with relevant data from data base 20, an XML file is created containing instructions, details, attributes for the layout, the structure and the content of the briefing book to be generated. According to the invention, the creation of an extensible markup language file allows improved and uncomplicated use of the invention as the updated briefing book structure can be further handled with any commercially available software tool for final editing and printing. For this, the markup language file is exported from server unit 12 to front-end computer 18 via interface 16 for final editing and/or printing on the front-end computer 18 (cf. arrow 26 in Figure 2, step D) with formatting tags contained in the XML file being interpreted and mapped by the software tool used for this step. Particularly, the XML file is imported from the server side to the front-end side, placeholders are replaced with the actual data, all templates are automatically compiled into one book based on the structure, formatting finish (if necessary) and storing the resulting book structure as print version file.

The placeholders that are defined in a page layout preferably have options on how to handle various sizes of selected data in case the selected data should not fit into the available place of the placeholder. Advantageously, several options are provided for selection by the user, e.g. cut off text that does not fit in the designated text box, allow a flexible size of a text box to display the whole information (with the consequence that subsequent pages might be affected in their layout, reduce/adapt font size automatically, issue a warning to the user.

Finally, referring again to Figure 2, the print version file obtained as described above is printed and/or mailed and/or published in step E. It is to be understood that the terms "printing" and "book" in the context of this invention relate to both traditional hardcopy printing and modern electronic printing (e.g. by creating so-called pdf-files).

Thus, the invention provides a very useful method and system for creating updated book versions by using the logical units concept in order to link a layout structure with a set of data which is available and regularly updated anyway. This concept allows the use of commercially available software tools for the front-end layout and editing work by connecting these commercial tools to the existing data base of the user. As a consequence of the interface technology of the invention, a user is now in a position to use his existing data base content in an automated manner to create updated reports, briefing books, manuals and the like.

## Claims

1. A computer-implemented method for creating a book text structure for repeated generation of updated book versions comprising the steps of
A) on a client front-end computer (18), creating layout templates for various object types;
B) on a data base server unit (12) containing a collection of logical units (22), receiving a request from the client front-end computer for data to be allocated to the layout templates, interpreting the template structure data is requested for, selecting data based on the logical units and assigning layout templates to book chapters;
C) retrieving required data and inserting the retrieved data in the chapter structure created in step B, and generating a markup language file on the basis of the chapter structure containing the retrieved data;
D) on the client front-end computer, importing the markup language file generated in step C and converting the same into a print format file.

2. A method according to claim 1, wherein the markup language file is submitted to a final editing before being converted into a print format file.

3. A method according to claim 1 or 2, wherein the markup language is an extensible markup language.

4. A method according to any one of claims 1 to 3, wherein the logical units (22) contain attributes or call parameters for selecting desired data from data base (20) via a data interface (21).

5. A method according to any one of claims 1 to 4, wherein the data is selected from a data base (20) containing an existing updated collection of selectable data.

6. A computer system for creating a book text structure for repeated generation of updated book versions, comprising
a client front-end computer (18); and
a data base server unit (12);
the data base server unit (12) containing a collection of logical units (22) as well as a data base (20) with a collection of selectable data stored thereon;
the front-end computer (18) comprising computing means to create layout templates for various object types, and the data base server unit (12) comprising a front-end interface (16) to receive a request from the client front-end computer (18) for data to be allocated to the layout templates;
the data base server unit (12) also comprising an interpretation module to interpret the template structure data is requested for, a selection module for selecting data based on the logical units (22) and an assignment module for assigning layout templates to book chapters, whereas required data is retrieved from the data base (20) and inserted in the book chapter structure;
the data base server unit (12) further comprising means to generate a markup language file on the basis of the chapter structure containing the retrieved data, the markup language file being exported via front-end interface (16)to the client front-end computer (18) where the file is converted into a print format file.

7. A computer system according to claim 6, wherein the markup language file can be submitted to final editing before being converted into a print format file.

8. A computer system according to claim 6 or 7, wherein the markup language is an extensible markup language.

9. A computer system according to any one of claims 6 to 8, wherein the logical units (22) contain attributes or call parameters for selecting desired data from data base (20) via a data interface (21).

10. A computer system according to any one of claims 6 to 9, wherein the selectable data stored on the data base (20) is existing updated data.

11. A computer program product with a computer-readable medium and a computer program stored on the computer-readable medium with program coding means which are suitable for carrying out a method according to any one of claims 1 to 5 when the computer program is run on a computer.

12. A computer program with program coding means which are suitable for carrying out a method according to any one of claims 1 to 5 when the computer program is run on a computer.

13. A computer-readable medium with a computer program stored thereon, the computer program comprising program coding means which are suitable for carrying out a method according to any one of claims 1 to 5 when the computer program is run on a computer.
